# FASCICULE DE BREVET EUROPEEN

(11) **EP 1 963 974 B1**
(45) Date de publication et mention de la délivrance du brevet: **01.07.2009**
(21) Numéro de dépôt: 06842018.1
(22) Date de dépôt: 21.11.2006
(51) Int. Cl.: G06F 11/00, B60T 8/88, B60T 7/04

(54) **DISPOSITIF ET PROCEDE DE DETERMINATION DE LA VALEUR D'UNE INFORMATION BINAIRE, DELIVREE DE MANIERE REDONDANTE, ET REPRESENTATIVE D'UN PARAMETRE D'UN SYSTEME**
VORRICHTUNG UND VERFAHREN ZUR BESTIMMUNG DES WERTS EINES BINÄRPUNKTS, DER REDUNDANT GELIEFERT WIRD UND REPRESENTATIV FÜR EINEN PARAMETER EINES SYSTEMS IST
DEVICE AND METHOD FOR DETERMINING THE VALUE OF A BINARY ITEM, DELIVERED IN A REDUNDANT MANNER, AND REPRESENTATIVE OF A PARAMETER OF A SYSTEM

(30) Priorité: 22.12.2005 FR 0513193
(43) Date de publication de la demande: 03.09.2008
(73) Titulaire: Renault SAS, 92100 Boulogne Billancourt (FR)
(72) Inventeur: DANG VAN NHAN, Christophe, F-94800 Villejuif (FR)
(86) Numéro de dépôt international: PCT/FR2006/051207
(87) Numéro de publication internationale: WO 2007/071857

(56) Documents cités:
- WO-A-00/24618
- US-A- 5 954 407
- US-A1- 2005 061 563
- US-B1- 6 318 819
- US-B1- 6 345 225

## Description

La présente invention concerne un dispositif et un procédé de détermination de la valeur d'une information binaire, délivrée de manière redondante, et représentative d'un paramètre d'un système.

Lorsqu'on désire déterminer la valeur d'une information binaire représentative d'un paramètre d'un système, par exemple la position « appuyée » ou « relâchée » d'une pédale, il est possible d'avoir recours à un élément de détermination tel un capteur de mesure de type « tout ou rien » qui indique l'état du système.

L'information binaire représente alors l'état du système. Dans un tel cas, une panne de ce capteur ou de la chaîne d'acquisition de données de ce capteur peut faire perdre toute information binaire ou délivrer une information binaire erronée.

L'ajout d'un deuxième élément de détermination indépendant, par exemple un deuxième capteur semblable, permet d'assurer, qu'en cas de panne d'un élément de détermination, il reste une information binaire correcte transmise par le deuxième élément de détermination.

Toutefois, lorsque les deux informations binaires respectivement transmises par les deux éléments de détermination sont contradictoires, il n'est pas possible de savoir laquelle est correcte. Cela peut se produire par exemple lorsqu'un des éléments de détermination est en dysfonctionnement et transmet une information binaire constante.

L'ajout d'un troisième moyen de détermination, par exemple un troisième capteur, permettrait de lever cette contradiction. Cependant, l'ajout d'un troisième élément de détermination a un coût excessif par rapport à une solution à deux éléments de détermination.

Il existe des systèmes gérant la redondance d'une information binaire transmise par deux éléments de détermination.

Le document US 5 016 587 utilise une corrélation temporelle permettant de détecter les incohérences et d'identifier le capteur défectueux après utilisation de traitements complexes et coûteux.

Le document US-A-6 318 819 est considéré représenter l'état de la technique le plus proche, car il décrit un procédé et un dispositif pour la détection et le traitement d'erreurs dans un système de freinage. Certains évènements ayant un intérêt d'ordre technique relatif au système et pouvant occasioner des transitions d'états du système d'un état vers un autre sont détectés et traités de manière à tolérer des erreurs.

Un but de l'invention est de gérer la redondance de l'information binaire de manière efficace et à coût réduit.

Aussi, selon un aspect de l'invention, il est proposé un dispositif de détermination de la valeur d'une information binaire, délivrée de manière redondante par deux moyens de détermination distincts, et représentative d'un paramètre d'un système. Ladite information binaire vaut une première ou une deuxième valeur lorsque ledit paramètre est compris respectivement dans une première ou une deuxième plage de valeurs. Lesdites première et deuxième plages de valeurs sont séparées par une plage de valeurs transitoire dans laquelle s'effectuent les transitions de valeur de l'information binaire, respectivement transmise par lesdits moyens de détermination. Le dispositif comprend des moyens de décision, comprenant une machine à états, adaptée pour affecter, lorsqu'un desdits moyens de détermination délivre une information binaire dépourvue de transition de valeur à cause d'un dysfonctionnement, respectivement ladite première ou deuxième valeur prédéterminée délivrée par l'autre moyen de détermination, fonctionnant normalement, quand ledit paramètre est compris dans ladite première ou deuxième plage de valeurs.

Ainsi, lorsqu'un des deux moyens de détermination est défaillant ou, en d'autres termes, lorsque l'information binaire qu'il transmet ne présente plus de transition, l'information binaire

représentative du paramètre du système continue à être déterminée correctement grâce aux transitions de l'élément de détermination qui ne présentent pas de défaillance.

En outre, un tel dispositif est de coût réduit et de faible complexité.

Avantageusement, lesdits moyens de décision sont adaptés pour affecter ladite première valeur à ladite information binaire lorsque lesdits moyens de détermination fonctionnent normalement et délivrent ladite première valeur quand ledit paramètre est compris dans ladite première plage de valeurs, et pour affecter ladite deuxième valeur à ladite information binaire lorsque lesdits moyens de détermination fonctionnent normalement et délivrent ladite deuxième valeur quand ledit paramètre est compris dans ladite deuxième plage de valeurs.

Ainsi, lorsque les deux moyens de détermination fonctionnent normalement, en dehors de la plage de transition pour le paramètre représenté, l'information binaire est correctement déterminée.

Dans le premier mode de réalisation, lesdits moyens de décision comprennent une machine à deux états, un premier état et un deuxième état correspondant respectivement à l'information binaire valant ladite première et ladite deuxième valeur. Ladite machine à deux états est adaptée pour effectuer un changement d'état du premier état au deuxième état lorsqu'a lieu une transition de ladite première valeur à ladite deuxième valeur pour ladite information binaire délivrée par l'un desdits moyens de détermination, et pour effectuer un changement d'état du deuxième état au premier état lorsqu'a lieu une transition de ladite deuxième valeur à ladite première valeur pour ladite information binaire délivrée par l'un desdits moyens de détermination.

Une telle machine à deux états permet de délivrer une information binaire correcte, même si l'un des deux moyens de détermination est en état de dysfonctionnement, et transmet une information binaire dépourvue de transition.

Avantageusement, le dispositif comprend en outre des moyens d'initialisation adaptés pour initialiser ladite machine à états à un état prédéterminé parmi lesdits premier et deuxième états.

Ainsi, il est possible de privilégier un état par défaut.

Dans un autre mode de réalisation, lesdits moyens de décision comprennent une machine à six états, trois premiers états et trois deuxièmes états correspondant respectivement à ladite information binaire valant ladite première valeur et ladite deuxième valeur, adaptée pour effectuer un changement d'état en fonction des couples de valeurs de ladite information binaire transmis par lesdits moyens de transmission.

Une telle machine à états fonctionne sur le niveau des états, et présente des facilités d'implémentation.

Avantageusement, le dispositif comprend en outre des moyens d'initialisation adaptés pour initialiser ladite machine à états à un état prédéterminé.

Dans un mode de réalisation, ladite machine à six états comprend un état supplémentaire d'initialisation correspondant à ladite première valeur ou à ladite deuxième valeur.

Avantageusement, un état est représenté par trois éléments binaires, le premier élément binaire étant égal à ladite information binaire déterminée par les moyens de décision, le deuxième élément binaire étant égal à la valeur de l'information binaire transmise par l'un desdits moyens de détermination, et le troisième élément binaire étant égal à la valeur d'information binaire transmise par l'autre moyen de détermination.

Avantageusement, ladite machine à six états comprenant un état supplémentaire d'initialisation, l'état supplémentaire d'initialisation est représenté par le premier élément binaire étant égal à ladite première valeur et les deuxième et troisième éléments binaires étant égaux à ladite deuxième valeur, ou par le premier élément binaire étant égal à ladite deuxième valeur et les deuxième et troisième éléments binaires étant égaux à ladite première valeur.

Dans un mode de réalisation préféré, ladite information binaire étant codée informatiquement sur un bit, ledit bit représentant ladite première valeur lorsqu'il vaut zéro et ladite deuxième valeur lorsqu'il vaut un.

Avantageusement, ladite machine à états est réalisée en logique synchrone comprenant trois bascules, un module d'initialisation, une horloge de cadencement, et un module de calcul.

Une telle implémentation est aisée et peu coûteuse.

Par exemple, l'information binaire est représentative de la position d'une pédale de frein d'un véhicule automobile, délivrée de manière redondante par deux capteurs de position de la pédale de frein.

Selon un autre aspect de l'invention, il est également proposé un procédé de détermination de la valeur d'une information binaire, délivrée de manière redondante par deux moyens de détermination distincts, et représentative d'un paramètre d'un système. Ladite information binaire vaut une première ou une deuxième valeur lorsque ledit paramètre est compris respectivement dans une première ou une deuxième plage de valeurs, lesdites première et deuxième plages de valeurs étant séparées par une plage de valeurs transitoire dans laquelle s'effectuent les transitions de valeurs de l'information binaire respectivement transmises par lesdits moyens de détermination. On utilise une machine à états, et on affecte, lorsqu'un desdits moyens de détermination délivre une information binaire dépourvue de transition de valeur à cause d'un dysfonctionnement, respectivement ladite première ou deuxième valeur prédéterminée délivrée par l'autre moyen de détermination, fonctionnant normalement, quand ledit paramètre est compris dans ladite première ou deuxième plages de valeurs.

D'autres buts, caractéristiques et avantages de l'invention apparaîtront à la lecture de la description suivante, de quelques exemples nullement limitatifs, et faisant référence aux dessins annexés, sur lesquels :
- la figure 1 représente un dispositif selon un aspect de l'invention ;
- la figure 2 représente la valeur de l'information binaire fournie par les moyens de détermination et délivrée par les moyens de décision, fonctionnant normalement,en fonction des plages de valeurs du paramètre qu'elles représentent, selon un aspect de l'invention ;
- la figure 3 représente une machine à deux états des moyens de décision du dispositif selon un aspect de l'invention ;
- la figure 4 représente une machine à six états des moyens de décision du dispositif selon un autre aspect de l'invention ;
- les figures 5 et 6 représentent une initialisation d'un dispositif selon la figure 4, selon un aspect de l'invention ;
- les figures 7 et 8 représentent un perfectionnement d'un dispositif selon la figure 4, dans lequel un état supplémentaire d'initialisation est ajouté, selon un aspect de l'invention ;
- les figures 9 et 10 illustrent une optimisation des dispositifs selon les figures 7 et 8, par codage d'un état de la machine ; et
- les figures 11 et 12 représentent un exemple d'implémentation des dispositifs des figures 9 et 10, en logique synchrone, selon un aspect de l'invention.

L'invention s'applique à tout paramètre d'un système représenté par une information binaire délivrée de manière redondante et par deux modules de détermination distincts.

Les modules de détermination peuvent être, par exemple, des modules d'évaluation ou des capteurs.

L'information binaire vaut une première ou une deuxième valeur lorsque le paramètre qu'elle représente est compris respectivement dans une première ou une deuxième plage de valeurs, les première et deuxième plages de valeurs étant séparées par une plage de valeurs transitoire dans laquelle s'effectuent les transitions de valeurs de l'information binaire, respectivement transmises par les deux modules de détermination.

Dans la suite de la description, la première valeur vaut 0, et la deuxième valeur vaut 1. Bien entendu, l'invention s'applique à tout autre couple de première et deuxième valeurs.

En outre, à titre d'exemple, l'information binaire peut représenter l'état d'une pédale ayant une course continue, mais dont on veut seulement savoir si elle est « appuyée » ou « relâchée », telle une pédale de frein d'un véhicule automobile.

Pour une pédale de frein, il faut donc produire une valeur « relâchée » dans une plage de début de course bien définie, et une valeur « appuyée » dans une plage de fin de course également bien définie. Ainsi, ces deux plages de valeurs sont séparées par une plage de transition dans laquelle s'effectue les transitions entre les valeurs « relâchées » et « appuyées ».

Bien entendu, l'invention s'applique à tout autre paramètre d'un système dont on veut connaître un état pouvant prendre deux valeurs.

Ainsi, dans la suite de la description, on nommera trois plages de valeurs : plage0, plage3 et plage1, correspondant respectivement aux plages de valeurs du paramètre pour lesquelles l'information binaire vaut respectivement 0 (première valeur), 0 ou 1 dans la plage de transition (première ou deuxième valeur) et 1 (deuxième valeur).

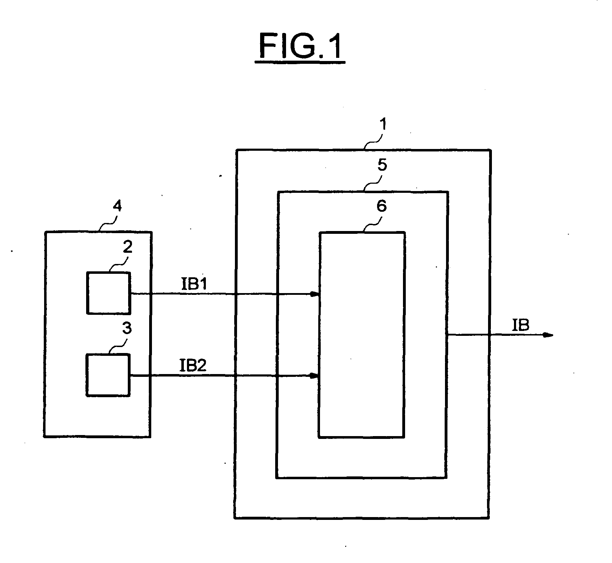

Tel qu'illustré sur la figure 1, un dispositif de détermination 1 reçoit une information binaire redondante IB1, IB2, respectivement transmise par deux modules de détermination 2, 3.

L'information binaire IB1, IB2 fournie de manière redondante, est représentative d'un paramètre d'un système 4.

L'information binaire IB1 et l'information binaire IB2, sont traitées directement par un module de décision 5 du dispositif 1.

Le traitement de la redondance de l'information binaire IB1, IB2 est effectué à l'aide d'une machine à états 6 des moyens de décision 5, permettant de déterminer correctement la valeur de l'information binaire IB lorsqu'un des modules de détermination 2, 3 délivre une information binaire dépourvue de transition de valeur à cause d'un dysfonctionnement.

Ainsi, le dispositif permet de déterminer correctement la valeur de l'information binaire, même lorsqu'un des deux modules de détermination 2, 3 subit un dysfonctionnement ou est en panne.

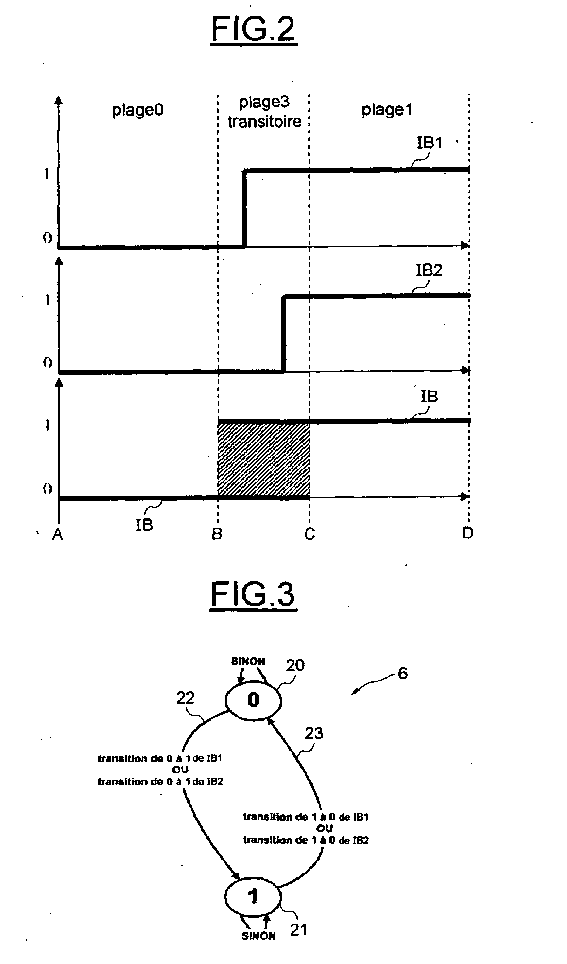

La figure 2 illustre le fonctionnement du dispositif de la figure 1, lorsque les deux modules de détermination 2 et 3 ont un fonctionnement nominal ou normal.

Une première courbe IB1 représente la valeur de l'information binaire transmise par le premier module de détermination 2 qui vaut zéro dans la première plage de valeurs, plage0 , correspondant au paramètre représenté compris entre une valeur A et une valeur B. La valeur de l'information binaire IB1 transmise par le premier module de détermination vaut un lorsque le paramètre représenté est compris dans la deuxième plage de valeurs, plage1, pour le paramètre correspondant compris entre une valeur C supérieure à la valeur B et inférieure à la valeur D.

La transition de la valeur zéro (première valeur) à la valeur un (deuxième valeur) de l'information binaire IB1 a lieu dans la plage transitoire correspondant à une valeur du paramètre représenté comprise entre la valeur B et la valeur C. Cette transition a lieu pour une valeur quelconque du paramètre représenté comprise entre la valeur B et la valeur C.

Pour un mode de fonctionnement nominal du système 4, l'allure de la courbe de l'information binaire IB2 transmise par le deuxième module de détermination 3 est similaire.

La transition de la valeur zéro à la valeur un de l'information binaire IB2 a lieu pour une valeur quelconque du paramètre représenté comprise entre la valeur B et la valeur C, indépendamment de la valeur de transition de l'information binaire IB1.

L'information binaire IB déduite de la redondance des deux informations binaires IB1 et IB2, et délivrée en sortie du dispositif 1 par le module de décision 5, vaut zéro dans la plage plage0, et un dans la plage plage1.

La partie grisée, correspondant à une valeur de paramètre représenté par l'information binaire comprise entre la valeur B et la valeur C, illustre le fait que la transition de la valeur zéro et la valeur un peut avoir lieu pour une valeur quelconque du paramètre comprise dans la plage transitoire plage3.

Les figures suivantes expliquent le fonctionnement d'un dispositif selon la figure 1, qui permet de délivrer en sortie une information binaire IB correcte même lorsqu'un des modules de détermination 2, 3 fournit une information binaire dépourvue de transition, lors d'un dysfonctionnement.

Sur la figure 3, est représentée une machine à deux états 6 avec des changements d'états basés sur des conditions de transition des informations binaires IB1, IB2 fournies par les modules de détermination 2, 3.

La machine à deux états 6 comprend un premier état binaire 20 correspondant à l'information binaire IB valant zéro (première valeur), et un deuxième état 21 correspondant à l'information binaire IB valant un (deuxième valeur).

Lorsque la machine à états 6 se trouve dans l'état 20, correspondant à l'information binaire IB valant zéro, si une transition de zéro à un a lieu pour l'information binaire IB1 ou pour l'information binaire IB2, alors la machine à états 6 passe dans l'état 21 correspondant à l'information binaire IB valant un, et reste dans l'état 20 correspondant à l'information binaire IB valant zéro sinon.

En outre, lorsque la machine à états 6 est dans le deuxième état 21 correspondant à l'information binaire IB valant 1, si une transition de un à zéro a lieu pour l'information binaire IB1 ou pour l'information binaire IB2, la machine à états 6 passe dans l'état 20 correspondant à l'information binaire IB valant 0.

Dans ce mode de réalisation, les conditions de transition de la machine à états 6 portent sur les transitions de valeurs des informations binaires redondantes IB1 et IB2.

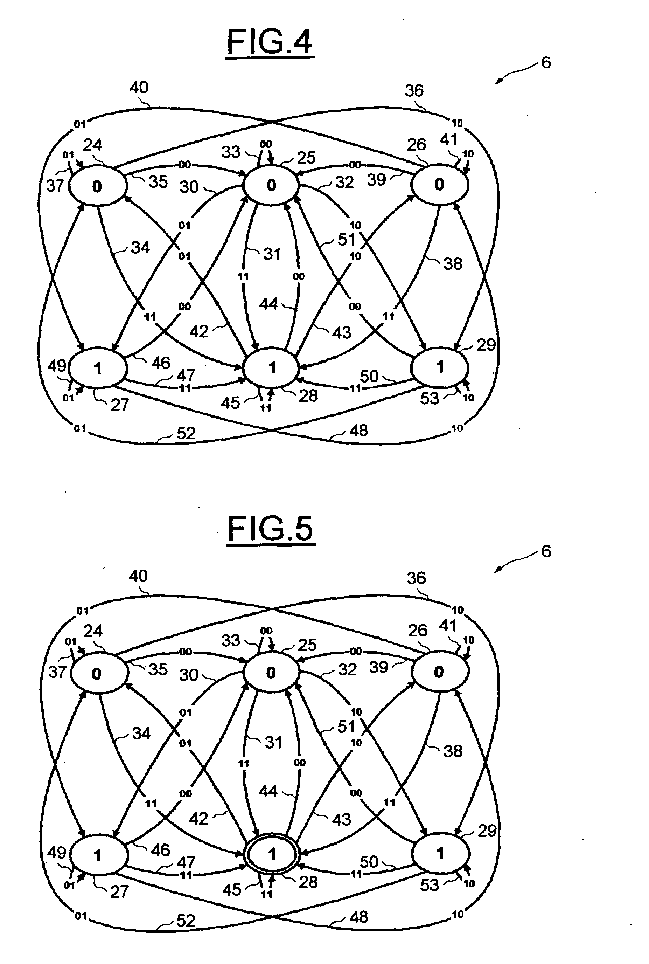

La figure 4 représente un mode de réalisation de la machine à états 6 comprenant six états. Il s'agit d'une transposition de la machine à états de la figure 3 en une machine à états avec des conditions de changement d'état sur les valeurs des informations binaires IB1 et IB2, et non sur les transitions des informations binaires IB1 et IB2.

Trois états 24, 25, 26 correspondent à une information binaire délivrée par la machine à états 6 valant zéro, et trois états 27, 28, 29 correspondent à une information binaire IB délivrée par la machine à états 6 valant un.

Lorsque la machine à états 6 se trouve dans l'état 25, si les informations binaires IB1 et IB2 valent respectivement zéro et un, alors la machine à états 6 passe dans l'état 27 par la transition 30, si les informations binaires IB1 et IB2 valent toutes deux un, la machine à états 6 passe dans l'état 28 par la transition 31, et si les informations binaires IB1 et IB2 valent respectivement un et zéro, la machine à états 6 passe dans l'état 29 par une transition 32. En outre, si les informations binaires IB1 et IB2 valent toutes deux zéro, la machine à états 6 reste dans l'état 25 par l'intermédiaire d'une transition 33.

Lorsque la machine à états 6 se trouve dans l'état 24, si les informations binaires IB1 et IB2 valent toutes deux un, la machine à états 6 passe dans l'état 28 par une transition 34, et si les informations binaires IB1 et IB2 valent toutes deux zéro, la machine à états 6 passe dans l'état 25 par la transition 35. Si les informations binaires IB1 et IB2 valent respectivement un et zéro, la machine à états 6 passe dans l'état 29 par une transition 36, et si les informations binaires IB1 et IB2 valent respectivement zéro et un, la machine à états 6 reste dans l'état 24 par une transition 37.

Lorsque la machine à états 6 se trouve dans l'état 26, si les informations binaires IB1 et IB2 sont toutes deux égales à un, la machine à états 6 passe dans l'état 28 par une transition 38, et si les informations binaires IB1 et IB2 valent toutes deux zéro, la machine à états 6 passe dans l'état 25 par une transition 39. Si les informations binaires IB1 et IB2 valent respectivement zéro et un, la machine à é'tats 6 passe à l'état 27 par une transition 40, et si les informations binaires IB1 et IB2 valent respectivement un et zéro, la machine à états 6 reste dans l'état 26 par une transition 41.

Lorsque la machine à états 6 se trouve dans l'état 28, si les informations binaires IB1 et IB2 valent respectivement zéro et un, la machine à états 6 passe dans l'état 24 par une transition 42, et si les informations binaires IB1 et IB2 valent respectivement un et zéro, la machine à états 6 passe dans l'état 26 par une transition 43. Si les informations binaires IB1 et IB2 valent toutes deux zéro, la machine à états 6 passe dans l'état 25 par une transition 44, et si les informations binaires IB1 et IB2 valent toutes deux un, la machine à états 6 reste dans l'état 28 par une transition 45.

Lorsque la machine à états 6 se trouve dans l'état 27, si les informations binaires IB1 et IB2 valent toutes deux zéro, la machine à états 6 passe dans l'état 25 par une transition 46, et si les informations binaires IB1 et IB2 valent toutes deux un, la machine à états 6 passe dans l'état 28 par une transition 47. Si les informations binaires IB1 et IB2 valent respectivement un et zéro, la machine à états 6 passe dans l'état 26 par une transition 48, et si les informations binaires IB1 et IB2 valent respectivement zéro et un, la machine à états 6 reste dans l'état 27 par une transition 49.

Lorsque la machine à états 6 se trouve dans l'état 29, si les informations binaires IB1 et IB2 valent toutes deux un, la machine à états 6 passe dans l'état 28 par une transition 50, et si les informations binaires valent toutes deux zéro, la machine à états 6 passe dans l'état 25 par une transition 51. Si les informations binaires IB1 et IB2 valent respectivement zéro et un, la machine à états 6 passe dans l'état 24 par une transition 52, et si les informations binaires IB1 et IB2 valent respectivement un et zéro, la machine à états 6 reste dans l'état 29 par une transition 53.

La figure 5 illustre une machine à états 6 selon la figure 4, dans laquelle l'état 28 est choisi comme état d'initialisation afin de privilégier un passage de la machine à états 6 à un état correspondant à l'information binaire IB valant 0. En effet, lorsque l'état 28 est choisi comme état d'initialisation, dès qu'un des modules de détermination 2 ou 3 transmet une information binaire IB1 ou IB2 égale à zéro, la machine à états 6 passe dans l'état 24, 25 ou 26 correspondant à une information binaire IB délivrée en sortie égale à zéro, respectivement par la transition 42, 44 ou 43.

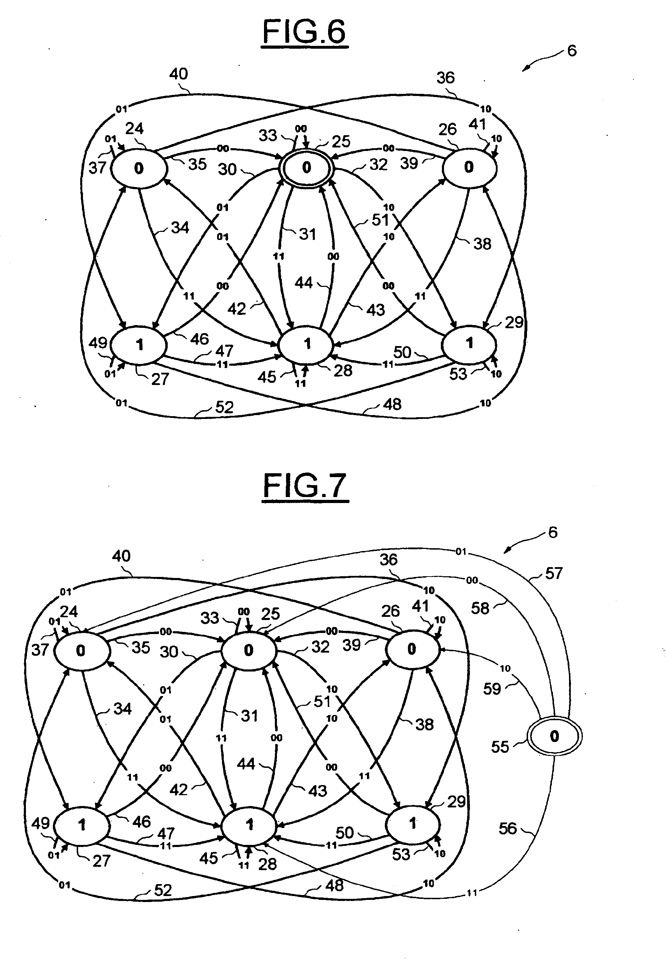

La figure 6 illustre une machine à états 6 selon la figure 4, dans laquelle l'état 25 est choisi comme état d'initialisation. Pour ce mode de réalisation, un passage de la machine à états 6 dans un état correspondant à une information binaire IB délivrée en sortie égale à un, est privilégié.

En effet, lorsque la machine à états 6 se trouve dans l'état 25, dès qu'un des deux modules de détermination 2 ou 3 transmet une information binaire IB1 ou IB2 égale à un, la machine à états 6 passe dans l'état 27, 28 ou 29 correspondant à une information binaire délivrée en sortie égale à 1, respectivement par la transition 30, 31 ou 32.

Les dispositifs des figures 5 et 6 permettent une initialisation déterministe du dispositif, avant même que ne se produise une transition sur l'une des deux informations binaires IB1 ou IB2.

Il est ainsi possible de privilégier un état de la machine à états 6 pour lequel l'information binaire IB vaut zéro, lorsqu'à la première réception des informations binaires IB1 et IB2 transmises par les modules de détermination 2 ou 3, les informations binaires IB1 et IB2 présentent des valeurs contradictoires.

Dans un tel cas, durant le temps de cycle d'initialisation, on déclare un état de la machine à états 6 qui n'est pas celui que l'on privilégie en cas de contradiction, mais cela n'est pas critique dans la majorité des applications, puisque le temps de cycle d'initialisation est généralement suffisamment court pour ne pas poser de problème.

La figure 7 illustre une machine à états 6 selon la figure 4, comprenant en outre un état supplémentaire d'initialisation 55 pour lequel l'information binaire IB vaut 0.

Lorsque la machine à états 6 se trouve dans l'état supplémentaire d'initialisation 55, si les informations binaires IB1 et IB2 reçues sont toutes deux égales à un, la machine à états 6 passe dans l'état 28 par une transition 56.

Lorsque les informations binaires IB1 et IB2 valent respectivement zéro et un, la machine à états 6 passe à l'état 24 par une transition 57. Lorsque les informations binaires IB1 et IB2 valent toutes deux zéro, la machine à états 6 passe à l'état 25 par une transition 58, et lorsque les informations binaires IB1 et IB2 valent respectivement un et zéro, la machine à états 6 passe à l'état 26 par une transition 59.

Ainsi, comme pour le mode de réalisation de la figure 5, un passage à un état de la machine à états 6, dans lequel l'information binaire IB délivrée en sortie vaut zéro, est privilégié.

En outre, un tel dispositif permet d'éviter un état transitoire indésirable durant le temps de cycle d'initialisation, car dès l'initialisation, la machine à états 6 est dans un état pour lequel l'information binaire IB vaut zéro.

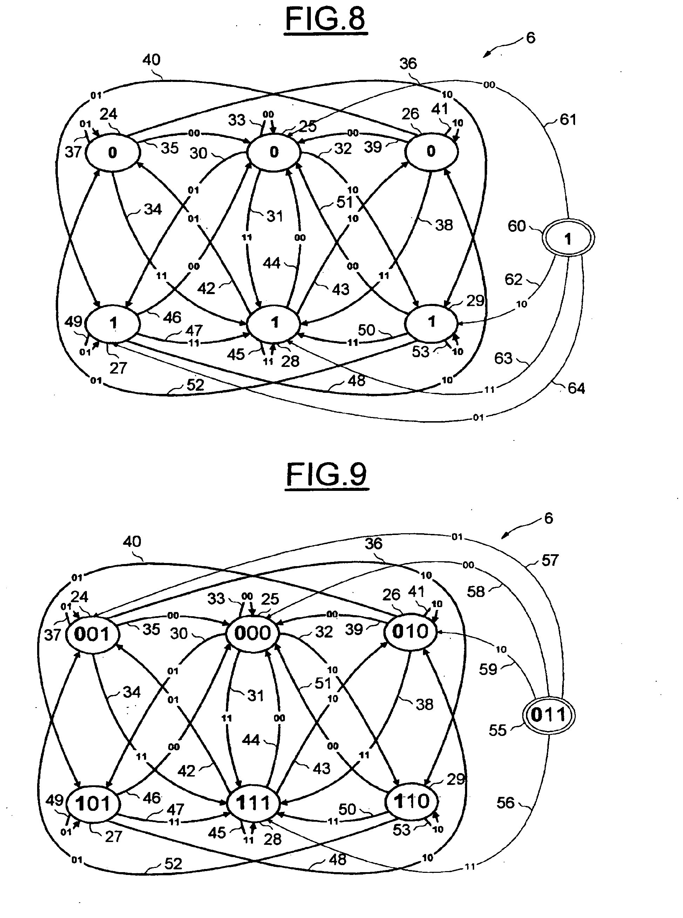

De même, la figure 8 illustre un mode de réalisation selon la figure 4, dans lequel un état supplémentaire d'initialisation 60 est ajouté à la machine à états 6, pour lequel l'information binaire IB délivrée en sortie vaut un.

Lorsque la machine à états 6 se trouve dans l'état 60, si les informations binaires IB1 et IB2 fournies sont toutes deux égales à zéro, la machine à états 6 passe dans l'état 25 par une transition 61. Lorsque les informations binaires IB1 et IB2 valent respectivement un et zéro, la machine à états 6 passe dans l'état 29 par une transition 62, lorsque les informations binaires IB1 et IB2 valent toutes deux un, la machine à états 6 passe dans l'état 28 par une transition 63, et lorsque les informations binaires IB1 et IB2 valent respectivement zéro et un, la machine à états 6 passe dans l'état 27 par une transition 64.

Un tel dispositif permet de favoriser un état d'initialisation de la machine à états 6, dans lequel l'information binaire de sortie vaut un, sans même observer d'état transitoire indésirable pendant le temps de cycle d'initialisation.

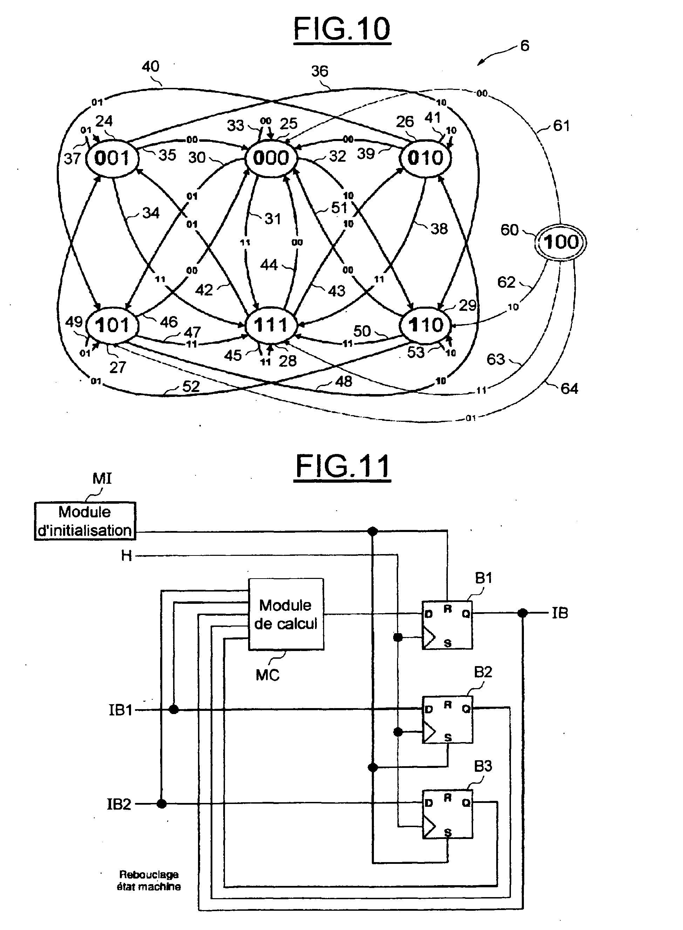

Les figures 9 et 10 illustrent respectivement un mode de réalisation des dispositifs selon les figures 7 et 8. Un état de la machine à états 6 est représenté par trois éléments binaires, le premier élément binaire étant égal à l'information binaire IB délivrée en sortie, le deuxième élément binaire étant égal à la valeur de l'information binaire IB1, et le troisième élément binaire étant égal à la valeur de l'information binaire IB2.

Dans ces exemples, les informations binaires peuvent prendre pou valeur zéro (première valeur) ou un (deuxième valeur). Bien entendu, ces modes de réalisation sont valables pour tout autre couple de première valeur et deuxième valeur.

Les états d'initialisation supplémentaires 55 et 60 étant respectivement représentés par le triplet 011 et 100.

Ainsi, la machine à états 6 peut être facilement implémentée, puisque la valeur de l'information binaire à délivrer par la machine à états 6 est directement le premier des trois éléments binaires représentant l'état dans lequel se trouve la machine à états 6.

En outre, lorsque la première valeur et la deuxième valeur sont zéro et un, un état de la machine à états peut être encodé sur seulement trois bits.

De manière générale, pour tous les modes de réalisation décrits, il est avantageux de prendre zéro et un comme première et deuxième valeurs des informations binaires IB1, IB2 et IB, car alors un seul bit suffit pour encoder une telle information binaire.

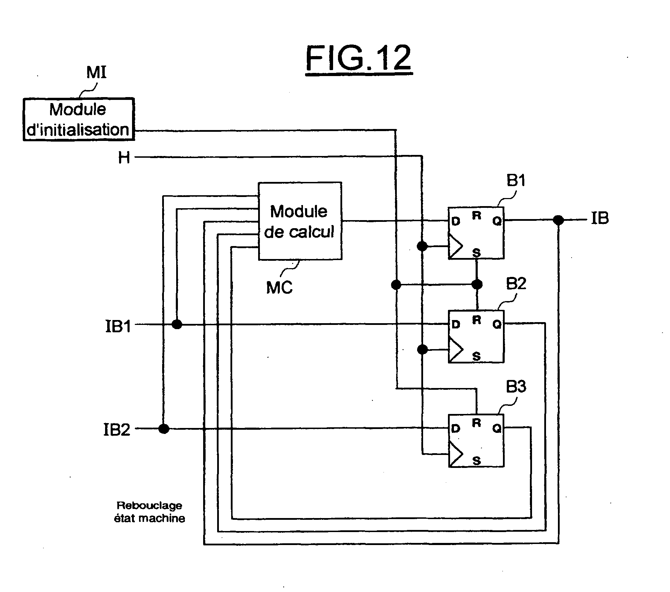

Les figures 11 et 12 illustrent respectivement une implémentation sous forme de logique synchrone des machines à état 6 selon les figures 9 et 10.

Bien entendu, les machines à états 6 décrites précédemment peuvent être réalisées sous forme logicielle, notamment avec un codage optimisé des états de la machine à états 6.

Les modes de réalisation des figures 11 et 12 comprennent trois bascules, B1, B2 et B3, un module d'initialisation MI et un module de calcul MC adapté pour produire le premier bit représentant le premier élément binaire d'encodage d'un état de la machine à états 6, qui est directement la valeur de l'information binaire IB délivrée en sortie.

Ces deux modes de réalisation ne nécessitent aucun module de calcul pour produire les deux derniers bits représentatifs des deux derniers éléments binaires codant un état de la machine à états 6.

Afin d'illustrer ce qui précède, nous explicitons le cas où l'information binaire est représentative de la position d'une pédale de frein d'un véhicule automobile, délivrée de manière redondante par deux capteurs de position de la pédale de frein.

Les capteurs de position sont deux contacts de début de course de la pédale, conçus et ajustés de façon à ce qu'ils fournissent chacun une information binaire valant zéro lorsque la pédale n'est pas sollicitée, et une information binaire valant un lorsque la pédale est suffisamment sollicitée pour actionner les freins.

Une plage transitoire existe sur la course de la pédale de frein située entre la position de repos de la pédale et la position de la pédale de frein qui commence à actionner effectivement les freins.

On choisit arbitrairement le contact qui transmet l'information binaire IB1 et le contact qui transmet l'information IB2, puisque l'invention fonctionne quel que soit l'ordre de commutation des capteurs, la machine à états 6 étant parfaitement symétrique.

Un état d'initialisation est choisi selon les exigences de fonctionnement de la pédale de frein. Ainsi, une initialisation à un état « appuyé » est effectuée, car les études de sûreté de fonctionnement prouvent qu'il est préférable par défaut de signaler une pédale de frein dans un état « appuyé », même si elle ne l'est pas réellement, plutôt que de signaler une pédale dans un état « relâché », alors qu'elle ne l'est pas réellement.

Il est en effet préférable de privilégier un état qui mène à un état « appuyé » de la pédale de frein délivré par la machine à états 6, pour la sécurité des passagers du véhicule.

Ainsi, si une défaillance mécanique ou électrique survient sur l'un des contacts, menant au figeage de la valeur de son information binaire transmise, la machine à états 6 continue à fonctionner et à fournir en sortie une information binaire IB correspondant à l'état « appuyé » ou « relâché » de la pédale de frein, qui est correcte. Il est inutile de gérer un quelconque mode dégradé de fonctionnement.

## Revendications

1. Dispositif (1) de détermination de la valeur d'une information binaire (IB), délivrée de manière redondante par deux moyens de détermination distincts (2, 3), et représentative d'un paramètre d'un système (4), ladite information binaire valant une première ou une deuxième valeur lorsque ledit paramètre est compris respectivement dans une première (plage0) ou une deuxième plage (plage1) de valeurs, lesdites première (plage0) et deuxième (plage1) plages de valeurs étant séparées par une plage de valeurs transitoire (plage3) dans laquelle s'effectuent les transitions de valeur de l'information binaire (IB1, IB2) respectivement transmise par lesdits moyens de détermination (2, 3), **caractérisé en ce qu'**il comprend des moyens de décision (5), comprenant une machine à états (6) adaptée pour affecter, lorsqu'un desdits moyens de détermination délivre une information binaire (IB1, IB2) dépourvue de transition de valeur à cause d'un dysfonctionnement, respectivement ladite première ou deuxième valeur prédéterminée délivrée par l'autre moyen de détermination, fonctionnant normalement, quand ledit paramètre est compris dans ladite première ou deuxième plage de valeurs.

2. Dispositif (1) selon la revendication 1, dans lequel lesdits moyens de décision (5) sont, en outre, adaptés pour affecter ladite première valeur à ladite information binaire lorsque lesdits moyens de détermination (2, 3) fonctionnent normalement et délivrent ladite première valeur quand ledit paramètre est compris dans ladite première plage de valeurs (plage0), et pour affecter ladite deuxième valeur à ladite information binaire (IB) lorsque lesdits moyens de détermination (2, 3) fonctionnent normalement et délivrent ladite deuxième valeur quand ledit paramètre est compris dans ladite deuxième plage de valeurs (plage1).

3. Dispositif (1) selon la revendication 2, dans lequel lesdits moyens de décision (5) comprennent une machine (6) à deux états (20, 21), un premier état (20) et un deuxième état (21) correspondant respectivement à l'information binaire (IB) valant ladite première et ladite deuxième valeur, adaptée pour effectuer un changement d'état du premier état (20) au deuxième état (21) lorsqu'a lieu une transition de ladite première valeur à ladite deuxième valeur pour ladite information binaire (IB1, IB2) délivrée par l'un desdits moyens de détermination (2, 3), et pour effectuer un changement d'état du deuxième état (21) au premier état lorsqu'a lieu une transition de ladite deuxième valeur à ladite première valeur pour ladite information binaire délivrée (IB1, IB2) par l'un desdits moyens de détermination (2, 3).

4. Dispositif selon la revendication 3, comprenant en outre des moyens d'initialisation adaptés pour initialiser ladite machine à états (6) à un état prédéterminé parmi lesdits premier (20) et deuxième (21) états.

5. Dispositif selon la revendication 2, dans lequel lesdits moyens de décision comprennent une machine à six états (24, 25, 26), trois premiers états (24, 25, 26) et trois deuxièmes états (27, 28, 29) correspondant respectivement à ladite information binaire valant ladite première valeur et ladite deuxième valeur, adaptée pour effectuer un changement d'état en fonction des couples de valeurs de ladite information binaire (IB1, IB2) transmis par lesdits moyens de transmission (2, 3).

6. Dispositif selon la revendication 5, comprenant en outre des moyens d'initialisation adaptés pour initialiser ladite machine à états à un état prédéterminé.

7. Dispositif selon la revendication 5, dans lequel ladite machine à six états (6) comprend un état supplémentaire d'initialisation (55, 60) correspondant à ladite première valeur ou à ladite deuxième valeur.

8. Dispositif selon l'une quelconque des revendications 5 à 7, dans lequel un état est représenté par trois éléments binaires, le premier élément binaire étant égal à ladite information binaire déterminée par lesdits moyens de décision (5), le deuxième élément binaire étant égal à la valeur d'information binaire transmise par l'un desdits moyens de détermination, et le troisième élément binaire étant égal à la valeur d'information binaire transmise par l'autre moyen de détermination.

9. Dispositif selon la revendication 8, dans lequel, ladite machine à six états (6) comprenant un état supplémentaire d'initialisation (55, 60), l'état supplémentaire d'initialisation est représenté par le premier élément binaire étant égal à ladite première valeur et les deuxième et troisième éléments binaires étant égaux à ladite deuxième valeur, ou par le premier élément binaire étant égal à ladite deuxième valeur et les deuxième et troisième éléments binaires étant égaux à ladite première valeur.

10. Dispositif selon l'une quelconque des revendications précédentes, dans lequel, ladite information binaire et lesdits éléments binaires sont encodés informatiquement sur un bit, ledit bit représentant ladite première valeur lorsqu'il vaut zéro et ladite deuxième valeur lorsqu'il vaut un.

11. Dispositif selon la revendication 10, dans lequel ladite machine à états est réalisée en logique synchrone comprenant trois bascules (B1, B2), un module d'initialisation (5), une horloge (H) de cadencement, et un module de calcul (MC).

12. Dispositif selon l'une quelconque des revendications précédentes, dans lequel l'information binaire (IB) est représentative de la position d'une pédale de frein d'un véhicule automobile, délivrée de manière redondante par deux capteurs de position de la pédale de frein.

13. Procédé de détermination de la valeur d'une information binaire, délivrée de manière redondante par deux moyens de détermination distincts (2, 3), représentative d'un paramètre d'un système, ladite information valant une première ou une deuxième valeur lorsque ledit paramètre est compris respectivement dans une première (plage0) ou une deuxième plage (plage1) de valeurs, lesdites première et deuxième plages de valeurs étant séparées par une plage de valeurs transitoire (plage3) dans laquelle s'effectuent les transitions de valeur de l'information binaire respectivement transmise par lesdits moyens de détermination (2, 3), **caractérisé en ce que** l'on utilise une machine à états (6), et on affecte, lorsqu'un desdits moyens de détermination délivre une information binaire dépourvue de transitions de valeur à cause d'un dysfonctionnement, respectivement ladite première ou deuxième valeur prédéterminée délivrée par l'autre moyen de détermination, fonctionnant normalement, quand ledit paramètre est compris dans ladite première ou deuxième plage de valeurs.

## Claims

1. Device (1) for determining the value of a binary item (IB), delivered in a redundant manner by two distinct determination means (2, 3), and representative of a parameter of a system (4), said binary item being equal to a first or a second value when said parameter lies respectively in a first (range0) or a second range (range1) of values, said first (range0) and second (range1) ranges of values being separated by a transient range of values (range3) in which the transitions of value of the binary item (IB1, IB2) respectively transmitted by said determination means (2, 3) occur, **characterized in that** it comprises decision means (5), comprising a state machine (6) suitable for assigning, when one of said determination means delivers a binary item (IB1, IB2) devoid of any transition of value because of a malfunction, respectively said first or second predetermined value delivered by the other determination means, which is operating normally, when said parameter lies in said first or second range of values.

2. Device (1) according to Claim 1, in which said decision means (5) are, furthermore, suitable for assigning said first value to said binary item when said determination means (2, 3) operate normally and deliver said first value when said parameter lies in said first range of values (range0), and for assigning said second value to said binary item (IB) when said determination means (2, 3) operate normally and deliver said second value when said parameter lies in said second range of values (range1).

3. Device (1) according to Claim 2, in which said decision means (5) comprise a machine (6) with two states (20, 21), a first state (20) and a second state (21) respectively corresponding to the binary item (IB) equal to said first and said second values, suitable for performing a change of state from the first state (20) to the second state (21) when a transition from said first value to said second value occurs for said binary item (IB1, IB2) delivered by one of said determination means (2, 3), and for performing a change of state from the second state (21) to the first state when a transition from said second value to said first value occurs for said binary item (IB1, IB2) delivered by one of said determination means (2, 3).

4. Device according to Claim 3, also comprising initialization means suitable for initializing said state machine (6) with a predetermined state from said first (20) and second (21) states.

5. Device according to Claim 2, in which said decision means comprise a machine with six states (24, 25, 26), three first states (24, 25, 26) and three second states (27, 28, 29) respectively corresponding to said binary item equal to said first value and said second value, suitable for performing a change of state according to pairs of values of said binary item (IB1, IB2) transmitted by said transmission means (2, 3).

6. Device according to Claim 5, also comprising initialization means suitable for initializing said state machine with a predetermined state.

7. Device according to Claim 5, in which said machine with six states (6) comprises an additional initialization state (55, 60) corresponding to said first value or to said second value.

8. Device according to any one of claims 5 to 7, in which a state is represented by three binary elements, the first binary element being equal to said binary item determined by said decision means (5), the second binary element being equal to the binary item value transmitted by one of said determination means, and the third binary element being equal to the binary item value transmitted by the other determination means.

9. Device according to Claim 8, in which, said machine with six states (6) comprising an additional initialization state (55, 60), the additional initialization state is represented by the first binary element being equal to said first value and the second and third binary elements being equal to said second value, or by the first binary element being equal to said second value and the second and third binary elements being equal to said first value.

10. Device according to any one of the preceding claims, in which said binary item and said binary elements are computer-encoded on one bit, said bit representing said first value when it is zero and said second value when it is one.

11. Device according to Claim 10, in which said state machine is implemented in synchronous logic comprising three flip-flops (B1, B2), an initialization module (5), a timing clock (H), and a computation module (MC).

12. Device according to any one of the preceding claims, in which the binary item (IB) is representative of the position of a brake pedal of a motor vehicle, delivered in a redundant manner by two brake pedal position sensors.

13. Method of determining the value of a binary item, delivered in a redundant manner by two distinct determination means (2, 3), representative of a parameter of a system, said item being equal to a first or a second value when said parameter lies respectively in a first (range0) or a second range (range1) of values, said first and second ranges of values being separated by a transient range of values (range3) in which the transitions of value of the binary item respectively transmitted by said determination means (2, 3) occur, **characterized in that** a state machine (6) is used, and, when one of said determination means delivers a binary item devoid of transitions of value because of a malfunction, respectively said first or second predetermined value delivered by the other determination means, which is operating normally, is assigned when said parameter lies in said first or second range of values.

## Patentansprüche

1. Vorrichtung (1) zur Bestimmung des Werts einer binären Information (IB), die redundant von zwei unterschiedlichen Bestimmungseinrichtungen (2, 3) geliefert wird und für einen Parameter eines Systems (4) repräsentativ ist, wobei die binäre Information einen ersten oder einen zweiten Wert hat, wenn der Parameter in einem ersten (plage0) bzw. einem zweiten (plage1) Wertebereich liegt, wobei der erste (plage0) und der zweite (plage1) Wertebereich durch einen Übergangs-Wertebereich (plage3) getrennt werden, in dem die Wertübergänge der binären Information (IB1, IB2) stattfinden, die jeweils von den Bestimmungseinrichtungen (2, 3) übertragen wird, **dadurch gekennzeichnet, dass** sie Entscheidungseinrichtungen (5) enthält, die eine Zustandsmaschine (6) enthalten, welche geeignet ist, um, wenn eine der Bestimmungseinrichtungen eine binäre Information (IB1, IB2) liefert, die aufgrund einer Funktionsstörung keinen Wertübergang aufweist, den ersten bzw. den zweiten vorbestimmten Wert zuzuweisen, der von der anderen, normal arbeitenden Bestimmungseinrichtung geliefert wird, wenn der Parameter im ersten oder zweiten Wertebereich liegt.

2. Vorrichtung (1) nach Anspruch 1, bei der die Entscheidungseinrichtungen (5) außerdem geeignet sind, um den ersten Wert der binären Information zuzuweisen, wenn die Bestimmungseinrichtungen (2, 3) normal arbeiten und den ersten Wert liefern, wenn der Parameter im ersten Wertebereich (plage0) liegt, und um den zweiten Wert der binären Information (IB) zuzuweisen, wenn die Bestimmungseinrichtungen (2, 3) normal arbeiten und den zweiten Wert liefern, wenn der Parameter im zweiten Wertebereich (plage1) liegt.

3. Vorrichtung (1) nach Anspruch 2, bei der die Entscheidungseinrichtungen (5) eine Maschine (6) mit zwei Zuständen (20, 21) enthalten, einen ersten Zustand (20) und einen zweiten Zustand (21), die je der binären Information (IB) entsprechen, die den ersten bzw. den zweiten Wert hat, die geeignet ist, um eine Zustandsänderung vom ersten Zustand (20) in den zweiten Zustand (21) durchzuführen, wenn ein Übergang vom ersten Wert auf den zweiten Wert für die binäre Information (IB1, IB2) stattfindet, die von einer der Bestimmungseinrichtungen (2, 3) geliefert wird, und um eine Zustandsänderung vom zweiten Zustand (21) in den ersten Zustand durchzuführen, wenn ein Übergang vom zweiten Wert auf den ersten Wert für die binäre Information (IB1, IB2) stattfindet, die von einer der Bestimmungseinrichtungen (2, 3) geliefert wird.

4. Vorrichtung nach Anspruch 3, die außerdem Initialisierungseinrichtungen aufweist, die geeignet sind, um die Zustandsmaschine (6) in einem vorbestimmten Zustand unter dem ersten (20) und dem zweiten (21) Zustand zu initialisieren.

5. Vorrichtung nach Anspruch 2, bei der die Entscheidungseinrichtungen eine Maschine mit sechs Zuständen (24, 25, 26) aufweisen, drei ersten Zuständen (24, 25, 26) und drei zweiten Zuständen (27, 28, 29), die der binären Information entsprechen, die den ersten Wert bzw. den zweiten Wert hat, die geeignet ist, um eine Zustandsänderung in Abhängigkeit von den Wertepaaren der binären Information (IB1, IB2) durchzuführen, die von den Übertragungseinrichtungen (2, 3) übertragen werden.

6. Vorrichtung nach Anspruch 5, die außerdem Initialisierungseinrichtungen aufweist, die geeignet sind, um die Zustandsmaschine in einem vorbestimmten Zustand zu initialisieren.

7. Vorrichtung nach Anspruch 5, bei der die Maschine mit sechs Zuständen (6) einen zusätzlichen Initialisierungszustand (55, 60) enthält, der dem ersten Wert oder dem zweiten Wert entspricht.

8. Vorrichtung nach einem der Ansprüche 5 bis 7, bei der ein Zustand von drei Binärelementen dargestellt wird, wobei das erste Binärelement gleich der von den Entscheidungseinrichtungen (5) bestimmten binären Information ist, das zweite Binärelement gleich dem binären Informationswert ist, der von einer der Bestimmungseinrichtungen übertragen wird, und das dritte Binärelement gleich dem binären Informationswert ist, der von der anderen Bestimmungseinrichtung übertragen wird.

9. Vorrichtung nach Anspruch 8, bei der, wenn die Maschine mit sechs Zuständen (6) einen zusätzlichen Initialisierungszustand (55, 60) enthält, der zusätzliche Initialisierungszustand **dadurch** dargestellt wird, dass das erste Binärelement gleich dem ersten Wert ist und die zweiten und dritten Binärelemente gleich dem zweiten Wert sind, oder dass das erste Binärelement gleich dem zweiten Wert ist und die zweiten und dritten Binärelemente gleich dem ersten Wert sind.

10. Vorrichtung nach einem der vorhergehenden Ansprüche, bei der die binäre Information und die Binärelemente 1-Bit-EDV-codiert sind, wobei das Bit den ersten Wert darstellt, wenn es den Wert Null hat, und den zweiten Wert, wenn es den Wert Eins hat.

11. Vorrichtung nach Anspruch 10, bei der die Zustandsmaschine als synchrones Logiksystem mit drei Kippstufen (B1, B2), einem Initialisierungsmodul (5), einem Taktgeber (H) und einem Rechenmodul (MC) hergestellt wird.

12. Vorrichtung nach einem der vorhergehenden Ansprüche, bei der die binäre Information (IB) für die Stellung eines Bremspedals eines Kraftfahrzeugs repräsentativ ist, die redundant von zwei Positionsgebern des Bremspedals geliefert wird.

13. Verfahren zur Bestimmung des Werts einer binären Information, die redundant von zwei unterschiedlichen Bestimmungseinrichtungen (2, 3) geliefert wird und für einen Parameter eines Systems repräsentativ ist, wobei die Information einen ersten oder einen zweiten Wert hat, wenn der Parameter sich in einem ersten (plage0) bzw. in einem zweiten (plage1) Wertebereich befindet, wobei der erste und der zweite Wertebereich durch einen Übergangs-Wertebereich (plage3) getrennt werden, in dem die Wertübergänge der binären Information stattfinden, die von den Bestimmungseinrichtungen (2, 3) übertragen wird, **dadurch gekennzeichnet, dass** eine Zustandsmaschine (6) verwendet wird, und, wenn eine der Bestimmungseinrichtungen eine binäre Information liefert, die aufgrund einer Funktionsstörung keine Wertübergänge aufweist, der von der anderen, normal arbeitenden Bestimmungseinrichtung gelieferte erste bzw. zweite vorbestimmte Wert zugewiesen wird, wenn der Parameter im ersten oder im zweiten Wertebereich liegt.
